Europäisches Patentamt

(19) European Patent Office

Office européen des brevets

(11) Publication number: **0 315 614 B1**

(12) **EUROPEAN PATENT SPECIFICATION**

(45) Date of publication of patent specification:
**17.04.91 Bulletin 91/16**

(51) Int. Cl.⁵: **B60R 3/02, B62D 33/02**

(21) Application number: **88850376.0**

(22) Date of filing: **02.11.88**

(54) **Step for lorry dropsides.**

The file contains technical information
submitted after the application was filed and
not included in this specification

(30) Priority: **02.11.87 SE 8704258**

(43) Date of publication of application:
**10.05.89 Bulletin 89/19**

(45) Publication of the grant of the patent:
**17.04.91 Bulletin 91/16**

(84) Designated Contracting States:
**BE CH DE ES FR GB IT LI NL SE**

(56) References cited:
**DE-A- 2 936 517**
**PATENT ABSTRACTS OF JAPAN, vol. 7, no.
223 (M-247)[1368], 4th October 1983; & JP-A-58
118 430 (KINUGAWA GOMU KOGYO K.K.) 14-
07-1983**

(73) Proprietor: **ARMATON AB**
**Box 179**
**S-53401 Vara (SE)**

(72) Inventor: **Andersson, Ragnvald**
**PI 3182 B, Täng**
**S-467 00 Grästorp (SE)**

(74) Representative: **Lenz, Franz et al**
**AWAPATENT AB Box 5117**
**S-200 71 Malmö (SE)**

## Description

The present invention relates to a step for lorry dropsides swingable between a lowered and a raised position. An example of an elongate step of this type is disclosed in DE-A-2 936 517.

For loading and unloading lorries, the workmen must frequently climb on to the platform and, once the dropsides have been lowered, this is usually done via the nearest projecting part, for example a ledge on the chassis, a hinge bolt, a wheel tyre etc. Such projections often have but a slight horizontal extent, or are sloping, for which reason the risk of slipping and suffering injuries is considerable. In fact, the greater part of all accidents in the haulage business are caused by such slipping.

It has been tried to provide some form of step arrangement, for example on the inside of the dropside, but these attempts have not been successful because such arrangements proved to be unhandy in use or could not be conveniently placed in position of use. Furthermore, they were easily damaged during handling of the cargo, or struck by another vehicle manoevring nearby, or they formed an obstacle to the manipulation of the dropsides. The present invention aims at providing a simple and inexpensive step that is correctly positioned and can be climbed without risk of slipping. This is achieved in that there is mounted, in a recess in the edge surface of the dropside, a step means which, when the dropside is raised, lies within the contour of the dropside and, when the dropside is lowered, can be folded out into a horizontal position to form the step.

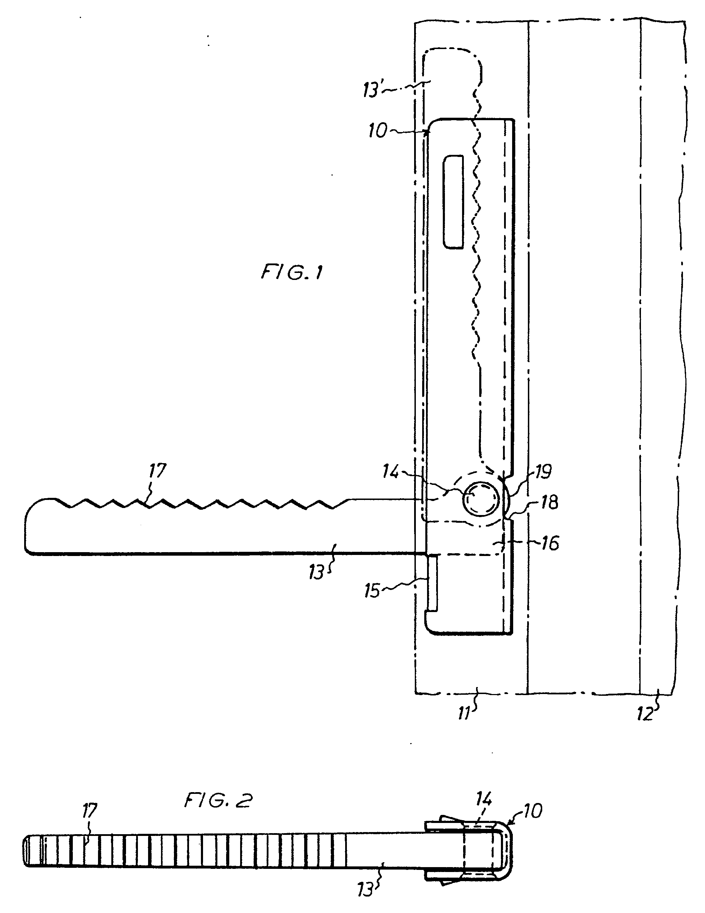

The invention will be described in more detail below, reference being had to the accompanying drawing which illustrates an embodiment chosen by way of example and in which Fig. 1 shows the step according to the invention attached to the dropside of a lorry, and Fig. 2 is a top plan view of the step.

In the drawing, a holder or bracket 10 of U-shaped cross-section is positioned in a correspondingly U-shaped portion of an edge member 11 which is secured, in conventional manner, to the short side of a lorry dropside 12 and which, when the dropside 12 has been raised, abuts against a platform stanchion mounted on the lorry platform. At the lower end (Fig. 1) of the holder 10, a pin 13 is mounted at its right-hand end (Fig. 1) by means of a rivet 14 extending through the flanges of the holder 10. The rivet 14 extends through a semicircular formation 19 at the end of the pin 13, said formation protruding into a hole in the web of the holder 10. Below the formation 19, a heel 16 is formed which, when the pin 13 is in the position shown in Fig. 1, abuts against the inside of the web of the holder 10. Below the pin 13 is an abutment 15 which extends across the holder 10 between the outwardly facing flange edges thereof. When pulled out, the pin 13 engages with its lower side also with the abutment 15 which, together with the heel 16 resting against the web of the holder, safely prevents downward movement of the pin 13 past the position shown in Fig. 1. The upper side of the pin 13 has a serration 17.

Fig. 1 shows the dropside 12 in its lowered position, the step-forming pin 13 projecting horizontally into the space between the mutually facing short sides of two adjacent dropsides. The workman climbing on to the platform puts one foot on the pin 13 and at the same time takes a grip on the platform stanchion above him and can then mount the platform. It is important that the pin 13 is not bent down, and for this reason the twin abutments 15 and 16 have been provided. After loading or unloading of the lorry, the dropside 12 is raised again, which occurs at right angles to the plane of the drawing, whereupon the pin 13 according to the preferred embodiment swings by gravity into the holder 10 and the U-shaped portion of the member 11 surrounding the holder, as indicated at 13'. Because the pin 13 is mounted at the end which, when the dropside 12 is in its raised position, is the upper end, the pin 13 will swing automatically when the dropside is moved between its raised and lowered positions. Since the pin 13 is mounted in the edge surface of the short side, the pin is safely protected against external damage in its folded-out position and, furthermore, forms no obstacle to the cargo in the folded-in position when the dropside has been raised. In some instances, it may be desirable to further secure the pin 13 in these two positions, for example by means of a snap mechanism consisting of a spring-loaded ball in the pin 13, said ball engaging into a recess in the inner wall surface of the holder 10.

The pin 13 is preferably mounted in a holder 10 which is screwed to the inside of the inner web surface of the edge member 11, thereby to facilitate replacement of the pin 13, if this should be damaged after all. However, the pin may also be mounted directly in the edge member 11 by means of a journal, for example a rivet, extending through the flanges of said edge member. Although the pin 13 is best mounted such that, in the folded-out position, it extends in the plane of the dropside 12, it may also be mounted such that it extends at right angles to the said plane, but then the risk of damage to the pin will increase.

## Claims

1. Step for a lorry dropside (12) swingable between a lowered and a raised postition, **characterised** in that there is mounted, in a recess in the edge surface of the dropside, a step means which, when the dropside (12) is raised, lies within the contour of the dropside and, when the dropside is lowered, can be folded out into a horizontal position to form the step.

2. A step as claimed in claim 1, in which the dropside (12) engages with upstanding platform stanchions along the lorry platform by means of a member (11) which is open toward the stanchion and extends along each short side of the dropside, **characterised** in that the step is in the form of a pin (13) which, when the dropside (12) is in its raised position, is mounted (at 14) at its upper end in the hollow space of the member (11) facing the stanchion and is hanging approximately vertically within the boundaries of said hollow space and, when the dropside is lowered, can be folded out into a position approximately perpendicular to the short side of the dropside.

3. A step as claimed in claim 2, **characterised** in that the pin (13), at the point where it is mounted with its upper end, has a heel (16) which, when the pin (13) is folded-out, abuts against the inner wall of said member (11) and holds the pin (13) in a position perpendicular to the short side of the dropside (12).

4. A step as claimed in claim 2 or 3, **characterised** in that the pin (13) is loosely swingable to fold automatically by gravity into the hollow space when the dropside (12) is raised, and out of said hollow space when the dropside (12) is lowered.

5. A step as claimed in claim 2 or 3, **characterised** by a snap mechanism arranged in said hollow space and holding the pin (13) in the folded-in or folded-out position.

6. A step as claimed in any one of the preceding claims, **characterised** in that the step is mounted in a holder which is U-shaped in cross-section and screwed into said hollow space for easy replacement.

**Ansprüche**

1. Klapptritt für eine zwischen einer heruntergeklappten und einer hochgeklappten Stellung schwenkbare LKW-Bordwand (12), dadurch **gekennzeichnet**, dass in einer Aussparung in der Bordwand-Kantenfläche ein Trittglied gelagert ist, das im hochgeklappten Zustand der Bordwand (12) innerhalb des Umrisses der Bordwand liegt und in deren heruntergeklapptem Zustand in eine horizontale Stellung herausklappbar ist, um den Tritt zu erstellen.

2. Klapptritt nach Anspruch 1, bei dem die Bordwand (12) mittels eines zur Runge offenen, sich längs jeder Schmalseite der Bordwand erstreckenden Glieds (11) gegen aufrechte Ladeflächenrungen anliegt, dadurch **gekennzeichnet**, dass der Klapptritt die Form einer Stange (13) hat, deren oberes Ende im hochgeklappten Zustand der Bordwand (12) in dem der Runge zugewandten Hohlraum des Glieds (11) (bei 14) angebracht ist und die etwa vertikal innerhalb der Grenzen des Hohlraums hängt und im heruntergeklappten Zustand der Bordwand in eine Stellung etwa senkrecht zur Schmalseite der Bordwand herausklappbar ist.

3. Klapptritt nach Anspruch 2, dadurch **gekennzeichnet**, dass die Stange (13) an demjenigen Punkt, wo sie mit ihrem oberen Ende gelagert ist, einen Absatz (16) aufweist, welcher in der herausgeklappten Stellung der Stange (13) gegen die Innenwand des genannten Glieds (11) zur Anlage kommt und die Stange (13) in einer Stellung senkrecht zur Schmalseite der Bordwand (12) hält.

4. Klapptritt nach Anspruch 2 oder 3, dadurch **gekennzeichnet**, dass die Stange (13) lose schwenkbar ist und beim Hochklappen der Bordwand (12) infolge der Schwerkraft automatisch in den Hohlraum hineinklappt und beim Herunterklappen der Bordwand (12) aus dem Hohlraum herausklappt.

5. Klapptritt nach Anspruch 2 oder 3, **gekennzeichnet** durch eine Schnappvorrichtung, die im Hohlraum angebracht ist und die Stange (13) in der hineingeklappten oder herausgeklappten Stellung hält.

6. Klapptritt nach einem der vorhergehenden Ansprüche, dadurch **gekennzeichnet**, dass er in einem Halter montiert ist, der einen U-förmigen Querschnitt hat und leicht austauschbar im Hohlraum eingeschraubt ist.

**Revendications**

1. Marchepied pour une ridelle (12) de camion qui peut pivoter entre une position abaissée et une position relevée, caractérisé en ce qu'il est prévu, dans un évidement de la surface du bord de la ridelle, un moyen formant marchepied qui, lorsque la ridelle (12) est relevée, est situé dans le flanc de la ridelle et qui, lorsque la ridelle est abaissée, peut être déployé en position horizontale pour former le marchepied.

2. Marchepied selon la revendication 1, dans lequel la ridelle (12) coopère avec des montants droits de plate-forme le long de la plate-forme du camion au moyen d'un élément (11) qui est ouvert en direction du montant et qui s'étend le long de chaque petit côté de la ridelle, caractérisé en ce que le marchepied est sous forme d'un axe (13) qui, lorsque la ridelle (12) est en position relevée, est monté (en 14) a son extrémité supérieure dans la cavité de l'élément (11) tournée vers le montant et est suspendu approximativement verticalement dans les limites de ladite cavité et qui, lorsque la ridelle est abaissée, peut être déployé en position approximativement perpendiculaire au petit côté de la ridelle.

3. Marchepied selon la revendication 2, caractérisé en ce que l'axe (13) comporte à son extrémité supérieure au niveau de laquelle il est monté un talon (16) qui, lorsque l'axe (13) est déployé, bute contre la paroi interne dudit élément (11) et maintient l'axe (13) dans une position perpendiculaire au petit côté de la ridelle (12).

4. Marchepied selon la revendication 2 ou 3, caractérisé en ce que l'axe (13) peut pivoter de façon lâche et de façon à se replier automatiquement par gravité dans la cavité lorsque la ridelle (12) est relevée et à se déployer depuis ladite cavité lorsque la ridelle (12) est abaissée.

5. Marchepied selon la revendication 2 ou 3, caractérisé par un mécanisme à enclenchement disposé dans ladite cavité et maintenant l'axe (13) en position repliée ou déployée.

6. Marchepied selon l'une quelconque des revendications précédentes, caractérisé en ce que le marchepied est monté dans un support de section transversale en forme de U vissé dans ladite cavité pour un remplacement facile.

FIG. 1

13'

10

17

14

19

18

16

13

15

11

12

FIG. 2

17

14

10

13